# EUROPEAN PATENT SPECIFICATION

(11) **EP 3 211 259 B1**
(45) Date of publication and mention of the grant of the patent: **13.03.2019**
(21) Application number: 17153110.6
(22) Date of filing: 25.01.2017
(51) Int. Cl.: F16D 13/64, F16D 65/12

(54) **CLUTCH FRICTION MEMBER FOR A FRICTION CLUTCH AND METHOD OF MANUFACTURING THE SAME**
KUPPLUNGSREIBUNGSELEMENT FÜR EINE REIBUNGSKUPPLUNG UND VERFAHREN ZUR HERSTELLUNG DAVON
ÉLÉMENT DE FRICTION D'EMBRAYAGE POUR UN EMBRAYAGE À FRICTION ET SON PROCÉDÉ DE FABRICATION

(30) Priority: 12.02.2016 NL 2016255
(43) Date of publication of application: 30.08.2017
(73) Proprietor: C3 Sport S.r.o., 74251 Mosnov (CZ)
(72) Inventor: Eindhoven, Gerrit, 56401 Zamberk (CZ)
(74) Representative: Nederlandsch Octrooibureau

(56) References cited:
- WO-A1-2015/040706
- DE-A1- 10 163 593
- DE-A1- 19 857 551
- DE-A1-102010 025 327
- DE-B- 1 168 178
- US-A- 3 210 303
- US-A- 5 325 941
- US-A1- 2011 272 238

## Description

### Field of the invention

The present invention relates to a clutch friction member for a friction clutch, in particular to a clutch friction member for a friction clutch as used for a transmission unit of motorized vehicle. In a further aspect the present invention relates to a method of manufacturing a clutch friction plate.

### Background

US patent application US 2004/0000443 A1 discloses a motorcycle clutch assembly comprising a drive portion including a clutch basket assembly and a driven portion including a clutch hub. A plurality of drive clutch plates are driven by the clutch basket assembly and a plurality of driven clutch plates are driven by the clutch hub. The drive clutch plates are desirably comprised of a base member and frictional pads attached to either, or both, sides thereof. The base member is preferably steel or aluminium, while the frictional pads are a material having a high frictional coefficient. The friction pad material may be of a paper or woven material type common to the automotive and motor cycle industry depending on the frictional and wear characteristics desired.

US patent application US 2003/0168303 A1 discloses a method of applying a wear resistant coating to a rotating component of a vehicle clutch, the method comprises the steps of providing the rotating component with a friction member, with the friction member being formed from aluminium and having a friction face thereon; and creating a friction surface on the friction face by applying a ferrous metal on the friction face with a PTWA thermal spray.

US patent publication US 5,325,941 discloses a rotor member and brake pad assembly for frictional coupling in a brake or a clutch. The rotor member comprises a first surface normal to the axis of rotation of said member and smoothed for frictional coupling and a second surface longitudinally opposed to the first surface. The rotor member comprises a homogeneous material comprised of a composite comprising a low density metal and a non-metallic material.

DE 10 2010 025 327 A1 discloses a method of manufacturing a clutch friction member whereby a clutch friction member support is baked with the clutch friction member.

### Summary of the invention

The present invention seeks to provide an improved clutch friction member for a friction clutch, in particular a clutch friction member for a transmission unit as used in a motorized vehicle such as a bus, truck, car, motorcycle and the like. The clutch friction member exhibits an improved resistance to wear and longer lifespan than a prior art clutch friction member, typically a clutch plate, disc or ring, without diminishing friction clutch performance.

According to the present invention, a clutch friction member of the type defined in the preamble is provided comprising a main friction member of a base material comprising aluminum and one or more friction components evenly distributed throughout the base material of the main friction member;
one or more outwardly projecting engagement members arranged along an outer circumference of the main friction member, for engagement with a driving or driven member, wherein the main friction member and the one or more engagement members form a single piece component, and wherein the one or more engagement members are made of the base material having evenly distributed there through the one or more friction components.

According to the present invention the one or more friction components are evenly distributed or evenly dispersed throughout the main friction member, in particular the base material thereof, thereby circumventing the use of one or more friction pads or friction layers separately applied to a side of the main friction member. This allows for a width reduction of the clutch friction member and in particular the main friction member thereof. Another advantage of the clutch friction member of the present invention is that there is no need for a separate friction layer of a different material embedded in or otherwise deposited on a side of the main friction member. Because separate friction pads and/or friction layers are dispensed with, the clutch friction member of the present invention can be made thinner and lighter yet provide adequate and reliable torque transfer as well as an improved lifespan. Furthermore, the main friction member can be used up or worn out to virtually any desired width as the coefficient of friction remains substantially the same throughout the width (or thickness) of the main friction member during use.

Furthermore, because the main friction member and the one or more engagement members form a single piece component, component count is reduced as well as cost and complexity, thereby allowing for efficient and cost effective sintering techniques for manufacturing the clutch friction member. Also, the base material comprises aluminum so that optimal heat transfer is provided during frictional engagement of the clutch friction member.

In a further aspect the present invention relates to a method of manufacturing a clutch friction member for a friction clutch, comprising the steps of
a) mixing a powder of a base material comprising aluminum with one or more friction components for obtaining an even powder blend thereof; and
b) forming the even blend of the base material and the one or more friction components into a main friction member having a predetermined shape; and
c) providing one or more engagement members along the main friction member, the one or more engagement members being made of the even powder blend of the base material and the one or more friction components, the method further comprising pressing the even powder blend into a clutch friction member of an intermediate shape; baking/heating the clutch friction member; and stamping the clutch friction member to a final shape.

An important advantage of the method of the present invention is that the clutch friction member can be sintered very efficiently as no separate friction pads and/or friction layers need to be applied and provided during the manufacturing process, i.e. mixing the base material and the one or more friction components immediately allows a main friction member to be formed having required frictional properties according to specifications throughout its homogenous material composition.

### Short description of drawings

The present invention will be discussed in more detail below, using a number of exemplary embodiments, with reference to the attached drawings, in which
Figure 1 shows a cross section of an embodiment of a prior art multi-plate clutch assembly;
Figure 2 shows a front view of an embodiment of a prior art clutch friction plate;
Figure 3 shows a front view of an embodiment of a clutch friction member according to the present invention;
Figure 4a and 4b each show a cross section of an embodiment of a clutch friction member according to the present invention; and
Figure 5 shows a cross section of an embodiment of a multi-plate clutch assembly according to the present invention.

### Detailed description of exemplary embodiments

In the automotive industry friction clutches are often used for releasable connecting a driving shaft and a driven shaft, wherein the driving shaft is often connected to a power source such as an internal combustion engine or an electric motor, and wherein the driven shaft often connects to a transmission unit. Many motorized vehicles such as a car, bus, truck, motorcycle and various all-terrain vehicles rely on a friction clutch to controllably release power from the power source to one or more wheels of the vehicle.

A friction clutch may be categorized as a dry friction clutch or a wet friction clutch, wherein a wet friction clutch comprises one or more clutch friction members immersed at least in part in a lubrication fluid acting as a cooling medium to prevent overheating of the one or more clutch friction members. A dry clutch on the other hand does not utilize a lubrication fluid for its operation.

As the name implies, a friction clutch relies on friction between one or more clutch members for transferring power from a driving member (e.g. a driving shaft) to a driven member (e.g. a driven shaft). The friction clutch often comprises a clutch friction plate having arranged thereon one or more friction surfaces for transferring torque imposed by the driving member to the driven member.

For example, a car may utilize a single clutch friction plate interposed between a flywheel acting as a driving member and a pressure plate arranged on an output hub acting as a driven member, wherein the driven member may utilize a transmission unit. As a further example, a motorcycle or all-terrain vehicles may comprise a plurality of clutch friction plates housed in a so-called clutch basket acting as a driving member connected to a driving shaft. The plurality of clutch friction plates may be interleaved with a plurality of pressure plates connected to an output hub acting as a driven member.

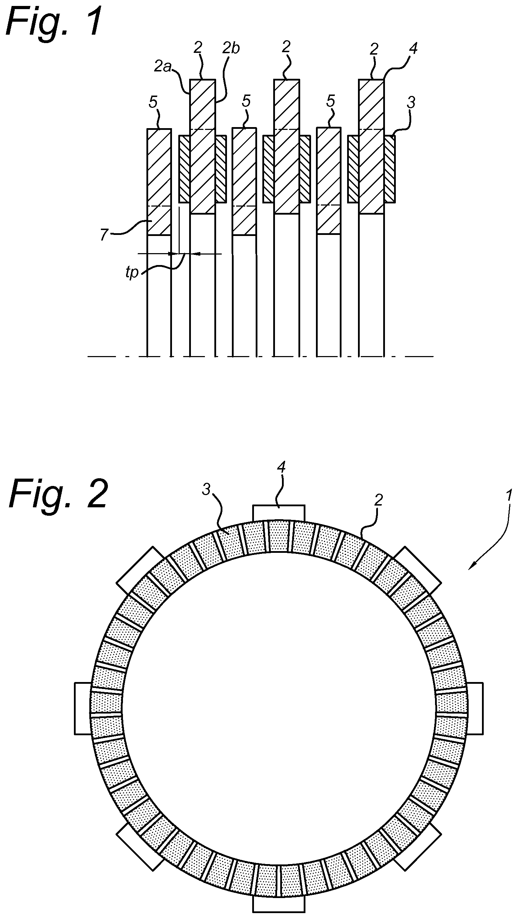

Figure 1 shows a cross section of an exemplary embodiment of a prior art multi-plate clutch assembly, and Figure 2 depicts a front view of an embodiment of a prior art clutch friction plate of such a multi-plate clutch assembly. In the embodiments shown, the multi-plate clutch assembly comprises one or more clutch friction members 2 or clutch friction plates 2 interleaved with a plurality of clutch pressure members 5 or clutch pressure plates 5. Each clutch friction plate 2 comprises a friction pad 3 arranged on one or both sides 2a, 2b of the clutch friction plate 2. Each clutch friction plate 2 may further comprise a plurality of engagement members 4 arranged along the clutch friction plate 2 for engagement with a driving or driven member. The plurality of engagement members 4 are in cooperative engagement with a plurality of corresponding cutouts or slots in a clutch basket (not shown). A clutch pressure plate 5 often comprises a plurality of engagement members 7 for cooperative engagement with, for example, a plurality of corresponding splines of an output hub (not shown). In most applications a clutch basket having the plurality of clutch friction plates 2 housed therein is considered to be a driving member as discussed above, so a clutch friction plate 2 may be considered to be a driving plate and a clutch pressure plate 5 may be considered as a driven plate. However, from a technical point of view the reverse is also possible, i.e. a clutch friction plate 2 may well be a driven plate and a clutch pressure plate 5 may well be driving plate.

The clutch friction plate 2 often comprises a circular geometry having, at least in part, a circular outer circumference and as such is sometimes referred to as a clutch friction disc or a clutch friction ring. In the embodiment shown the clutch friction plate 2 may further comprise one or more friction pads 3 attached on either side of the clutch friction plate 2. The clutch friction plate 2 may be made of steel or aluminum and a friction pad 3 may comprise paper and/or fibers in a binder of the type known to the automotive industry. The plurality of friction pads 3 may be attached to the clutch friction plate 2 by an adhesive and/or a mechanical connection, e.g., rivets, bolts etc. The clutch driven plates 5 is often made of steel and stamped to a predetermined thickness.

The prior art clutch friction plate 2 often suffers from a limited life span as a friction pad 3 attached thereto has a limited thickness, so when the friction pad 2 is used up or worn out, the clutch friction plate 2 must be replaced. For heavy duty and/or motorsport applications, for example, the clutch friction plate 2 may be subjected to excessive wear and the lifespan of the clutch friction plate 2 becomes problematic in light of clutch maintenance and associated costs. In light of this there is a need for a clutch friction plate 2 that exhibits a longer usable life span under high loads.

Another disadvantage is that the prior art clutch friction plate 2 has a relatively large thickness due to the friction pads 3 attached thereto. However, in motorized vehicles utilizing a multi-plate clutch assembly, the thickness of each clutch friction plate 2 may become an important design factor due to size constraints imposed by an engine block and/or a transmission unit. In motorcycles, for examples, having a small multi-plate clutch assembly is preferred to keep engine block dimensions to a minimum. Taking these considerations into account, there is a further need for a clutch friction plate 2 having an improved form factor yet allows for adequate and reliable power transfer from a driving shaft to a driven shaft.

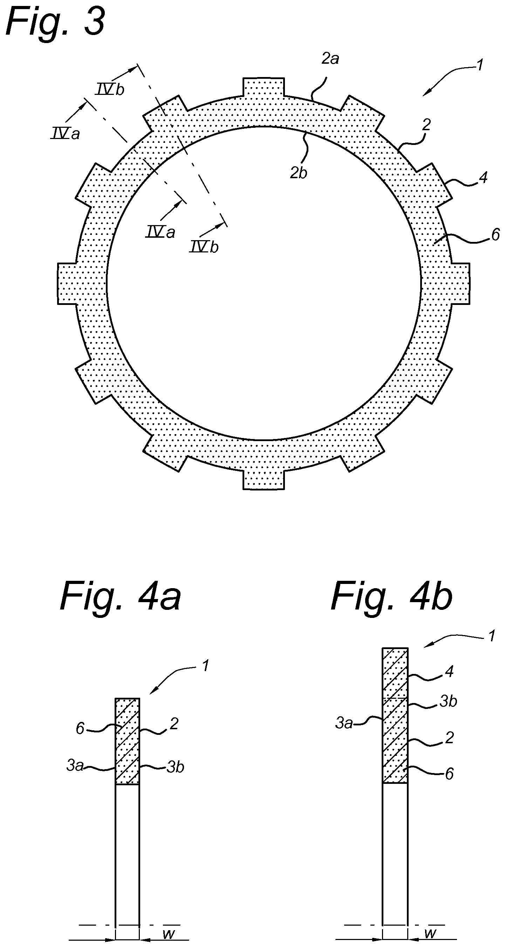

Figure 3 shows a front view of an embodiment of a clutch friction member according the present invention, and Figure 4a and 4b each show a cross section of an embodiment of a clutch friction member according to the present invention. In the embodiments shown, the clutch friction member 1 comprises a main friction member 2 of a base or main material and one or more engagement members 4 arranged along the main friction member 2 for engagement with a driving or driven member. Depending on requirements, in an embodiment the one or more engagement members 4 may comprise outwardly projecting engagement members 4 along an outer circumference 2a of the main friction member 2. In another embodiment the one or more engagement members 4 may comprise inwardly projecting engagement members 4 (not shown) arranged along an inner circumference 2b of the main friction member 2.

According to the invention, the clutch friction member 2 further comprises one or more friction components 6 evenly dispersed or evenly distributed throughout the main friction member 2, e.g. throughout the base material of the main friction member 2. The one or more friction components 6 may be viewed as one or more friction enhancing additives providing an increased coefficient of friction to the main friction member 2, in particular to one or more side surfaces 3a, 3b thereof. The one or more friction components 6 may be of a different material than the base material of the main friction member 2. Note that for clarity purposes, the one or more friction components 6 are schematically depicted dots 6 in Figure 3, 4a, 4b and 5.

Because the one or more friction components 6 are evenly distributed or evenly dispersed throughout the main friction member 2, the clutch friction member 1 of the present invention circumvents the use of one or more friction pads arranged on a side of the main friction member 2, thereby reducing a width w of the clutch friction member 1, in particular the main friction member 2. Furthermore, there is also no need for a separate friction layer of a different material embedded in or otherwise deposited on a side of the main friction member 2.

Because separate friction pads and/or friction layers are dispensed with, the clutch friction member 1 of the present invention can be made thinner, thus having a reduced with *w* yet provide adequate and reliable torque transfer as well as an improved lifespan. Furthermore, the main friction member 2 can be used up or worn out to any desired width w as the coefficient of friction thereof remains substantially the same throughout the main friction member 2 during use. For example, in contrast to prior art clutch friction plates there is no discernible change in material composition through frictional wear of the main friction member 2 as it comprises a homogenous material composition, i.e. comprising an even blend of a base material and one or more friction components 6.

In light of the above advantages, the clutch friction member 1 of the present invention can be made thinner yet provide a sufficiently long lifespan. When used in a multi-plate clutch assembly, the clutch friction member 1 of the present invention allows for a smaller "clutch pack" comprising an interleaved arrangement of one or more clutch friction plates and clutch pressure plates within a clutch basket, thereby reducing dimensions such as a width of the clutch pack within an engine block or transmission unit.

In an embodiment the one or more friction components 6 may each comprise friction particles, e.g. a powder of friction particles, that are evenly dispersed and distributed throughout the main friction member 2, in particular the base material thereof. In a specific embodiment the one or more friction components 6 comprise silicon carbide, aluminium oxide, zirconium silicate, steel or any combination thereof. These types of friction components provide increased friction to the main friction member 2, e.g. to the one or more side surfaces 3a, 3b thereof, and provide a coefficient of friction which is by and large independent of a particular thickness of the main friction member 2 during its lifespan. So when the main friction member 2 reduces in thickness during use, the coefficient of friction does not change abruptly for a particular thickness of the main friction member 2.

The clutch friction member 1 of the present invention can be utilized in various clutch types, transmission units and the like. As depicted in Figure 3, in a group of embodiments the main friction member 2 is a circular friction member, a circular friction disc or a circular friction ring. These embodiments facilitate the use of the clutch friction member 1 for existing clutch types available on the market, e.g. such as single or multi friction member clutches, or even centrifugal clutches, for the automotive industry, e.g. cars, trucks, motorcycles, off-road vehicles and the like.

In a specific embodiment the main friction member 2 is a circular friction member, wherein the circular friction member comprises a radially inward or outward facing side surface (not shown) for engagement with a friction surface. In this particular embodiment the main friction member 2 may be envisaged as being part of a centrifugal clutch, thus as a circular shoe member having a radially outward facing side surface for engagement with a radially inward facing friction surface of a circular drum member. During operation the circular shoe member displaces outwards in radial fashion for engagement with a circular drum member of the centrifugal clutch. Conversely, the circular friction member may also be envisaged as a circular drum member of a centrifugal clutch having a radially inward side surface for engagement with a radly outward facing friction surface of a circular shoe member.

In light of the present invention, the one or more friction components 6 are evenly dispersed or distributed throughout the main friction member 2, e.g. throughout the base material thereof. To simplify the production of the clutch friction member 1 as well as minimizing the number of different structural components, an advantageous embodiment is provided wherein the main friction member 2 and the one or more engagement members 4 form a single piece component. In this embodiment the one or more engagement members 4 are not attached to the main friction member 2 as separate components of the clutch friction member 1, thereby reducing component count of the clutch friction member 1. Furthermore, manufacturing the clutch friction member 1 is also simplified as it is possible to manufacture the clutch friction member 1 as a single piece component through sintering techniques, for example.

In a further embodiment, the one or more engagement members 4 are made of the base material having evenly distributed or dispersed there through the one or more friction components 6. In this embodiment the main friction member 2 as well as the one or more engagement members 4 have the same material composition, i.e. both comprise the base material having evenly dispersed or distributed there through the one or more friction components 6. This allows for greatly simplified manufacturing as a single material composition can be used for the main friction member 2 and the one or more engagement members 4.

It is known that heat may be generated during use of a friction clutch when the friction clutch couples or decouples a driving and a driven member. To optimize heat transfer and heat dissipation, an embodiment is provided wherein the base material comprises aluminum. From a practical point of view this embodiment provides a main friction member 2 which is made of aluminium having one or more friction components 6 evenly distributed throughout the aluminium, thereby providing optimal heat transfer during use of the clutch friction member 1, wherein optimal heat transfer is made possible directly at a side surface of the main friction member 2 which is in frictional engagement during use.

In an embodiment, the base material comprises 10 to 25 vol% of the one or more friction components 6. This provides a sufficient increase in the coefficient of friction to the main friction member 2. In a further embodiment, the one or more friction components 6 comprise silicon carbide, aluminium oxide, zirconium silicate, steel or any combination thereof. In a further embodiment the one or more friction components 6 comprise particles, e.g. particles or a powder of silicon carbide, aluminium oxide, zirconium silicate, steel or any combination thereof. In particle or powder form, the one or more friction components 6 can be evenly distributed throughout the base material and provide, at e.g. a side surface 3a, 3b of the main friction member 2, an increased coefficient of friction by increasing a surface roughness.

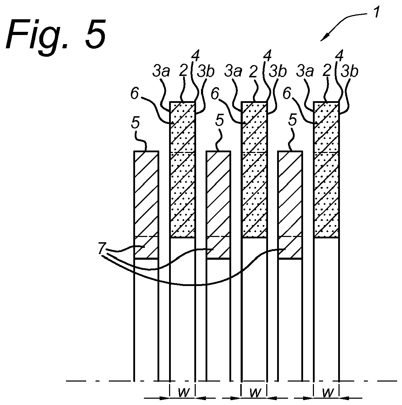

Figure 5 shows a cross section of an embodiment of a multi-plate clutch assembly according to the present invention. In the embodiment shown a multi-plate clutch is provided with an exemplary embodiment of a clutch friction member 1 as outlined above. Each of the depicted clutch friction members 1 comprises one or more engagement members 4 arranged along the main friction member 2 for engagement with a driving or driven member (not shown). Furthermore, one or more friction components 6 (drawn as dots) are evenly distributed throughout the base material of the main friction member 2 and the one or more engagement members 4.

The depicted clutch friction members 1 are interleaved with clutch pressure members 5 and lack, according to the invention, separate friction pads at one or both sides 3a, 3b. Indeed, each main friction member 2 and the one or more engagement members 4 arranged there along are made of an even blend of the base material and the one or more friction components 6, providing a desired coefficient of friction to the one or more sides 3a, 3b. Consequently, the width *w* of the clutch friction member 1 can be made smaller, thereby saving space and allows a multi-plate clutch pack as depicted to be smaller than prior art multi-plate clutch packs. The depicted clutch pressure plates 5 often comprise a plurality of engagement members 7 for cooperative engagement with, for example, a plurality of corresponding splines of an output hub (not shown).

In a further aspect, the present invention relates to a method of manufacturing a clutch friction member 1 for a friction clutch, wherein the method allows efficient production utilizing a minimum of materials and components for assembling the clutch friction member 1. The method is suitable for e.g. sintering a clutch friction member 1.

The method comprises the steps of a) mixing a base material with one or more friction components 6 for obtaining an even blend thereof. This step provides an even distribution or dispersion of the one or more friction components 6 throughout the base material, thus an even blend and homogenous material composition of the base material and the one or more friction components 6.

The method further comprises the step of b) forming the even blend of the base material and the one or more friction components 6 into a main friction member 2 having a predetermined shape. In this step a main friction member 2 is formed into a desired shape made of the even blend.

Then the method further comprises the step of c) providing one or more engagement members 4 along the clutch friction member 1, yielding a clutch friction member 1 for use in a friction clutch.

The method of the present invention provides a very efficient manufacturing process for obtaining a clutch friction member 1 having viewer parts yet provide good frictional properties, as well as an increased lifespan because the main friction member 2 comprises a homogenous material composition, allowing further reduction in width w during use of the clutch friction member 1 without diminishing frictional performance.

In an embodiment, the method step of b) may further comprises forming the even blend of the base material and the one or more friction components 6 into a circular friction member, a circular friction disc or a circular friction ring. In this step it is possible to conveniently define a shape of the main friction member 2 in more detail, such as shapes that are compatible with existing clutch types, e.g. single and multi-plate clutch types, as well as centrifugal clutch types.

In a further embodiment, the method further comprises the steps of d) grinding/sanding one or more sides of the clutch friction member 1, in particular the main friction member 2, to obtain a predetermined surface flatness and/or surface roughness thereof, and e) surface finishing the one or more sides. Through this embodiment a particular surface flatness and/or surface roughness within prescribed tolerances can be obtained to provide required performance of the clutch friction member 1. The surface finishing method step can be used to provide a particular surface reflectivity for light, providing desired aesthetic qualities.

In an even further embodiment, grinding may comprise grinding in water or oil of the one or more sides of the clutch friction member 1, in particular the main friction member 2. Also, a further embodiment is provided wherein surface finishing may comprise shot/sandblasting or anodizing the one or more sides of the clutch friction member 1, in particular the main friction member 2, thereby providing a desired color to the clutch friction member 1 for marketing purposes.

In an advantageous embodiment, prior to the method step of e) surface finishing the method may comprise pressing or milling a pattern on one or more sides of the main friction member 2. Such pattern may provide improved evacuation of various substances and fluids such as oil when the clutch friction member 1 engages with a friction surface.

According to the invention, the one or more friction components 6 are evenly distributed or dispersed through the main friction member 2, e.g. throughout the base material thereof. The method of the present invention allows the creation of the even blend of the one or more friction components 6 and the base material through e.g. sintering techniques.

For sintering a clutch friction member 1, an exemplary embodiment is provided wherein the step of a) mixing a base material with one or more friction components 6 further comprises mixing a powder of the base material with the one or more friction components 6 for obtaining an even powder blend thereof.

In this embodiment a base material in powder form is used and mixed with one or more friction components 6, which is also in powder form. The base material and the one or more friction components 6 comprise particles of predetermined size, dependent on the application.

Having obtained an even powder blend, the method step of b) forming the even blend of the base material and the one or more friction components 6 into a main friction member 2, i.e. clutch friction member 1, further comprises pressing the even powder blend into a clutch friction member 1 of an intermediate shape, baking (i.e. heating) the clutch friction member 1; and stamping the clutch friction member 1 into a final shape. In this embodiment the clutch friction member 1 is conveniently obtained when stamped to a final shape, no further steps are required for bonding or applying one or more friction pads, because the distribution of the one or more friction components 6 throughout the main friction member 2 or the entire clutch friction member 1 provides good friction enhancement.

In an advantageous embodiment stamping the clutch friction member 1 into a final shape may comprise fine blanking the clutch friction member 1 to a final shape, which ensures that dimensional tolerances can be kept to a minimum. More specifically, sintering under pressure typically shows dimensional tolerances of about - /+0.3 mm, so obtaining the clutch friction member 1 through a stamping or fine blanking step provides high dimensional accuracy. For example, sintering a clutch friction ring or disc and stamping/fine blanking the final clutch friction ring provides minimal dimensional tolerances.

In light of exemplary process parameters that may be used for sintering the clutch friction member 1, an embodiment is provided wherein the step of pressing the even powder blend comprises pressing at a pressure between 100 to 150 MPa, and wherein the step of baking/heating the clutch friction member 1 comprises baking/heating at a baking temperature between 500° to 600° degree Celsius and/or at a baking pressure between 0.5 to 1.4 MPa. These process parameters have shown to provide good structural properties such as strength and dimensional accuracy to the clutch friction member 1. In a further embodiment baking/heating may take place under a nitrogen (N₂) gas atmosphere for protection.

In an embodiment, the base material comprises 10 to 25 vol% of the one or more friction components 6, thereby providing adequate frictional enhancement and an increase in the coefficient of friction at one or more sides 3a, 3b of the clutch friction member 1. In advantageous embodiments the one or more friction components 6 comprise silicon carbide, aluminium oxide, zirconium silicate, steel or any combination thereof. These types of materials may be provided in powder form if desired and can be used for sintering of the clutch friction member 1.

In conformity with the clutch friction member 1 as disclosed earlier, in an embodiment of the method the base material comprises aluminium, which provides good thermal conductivity and cooling when the clutch friction member 1 is in frictional engagement and heat is developed.

With respect to sintering the clutch friction member 1 as outlined above, in an embodiment the powder of the base material may comprises aluminum so that the sintered clutch friction member 1 exhibits good thermal conductivity during frictional engagement. In an advantageous embodiment, the aluminum may comprise aluminum oxide (Al₂O₃), thereby increasing the durablity of the clutch friction member 1. When utilizing aluminum oxide, the method step of baking (i.e. heating) the clutch friction member 1 comprises baking/heating at a baking temperature between 1600°C and 1700°C degree Celsius, e.g. 1650 °C. Such high baking/heating temperatures may be accomplished through a sintering microwave furnace for example.

In an advantageous embodiment, the powder of the base material may further comprise Zinc, Magnesium, Copper and Ethylene Bis Stearamide (EBS). This embodiment increases the strength of a sintered clutch friction member 1 and further reduces internal friction during e.g. the pressing process due to internal lubrication of the even powder blend. For example, the powder of the base material may comprises 5 to 6 mass % Zinc, 2 to 3 mass % Magnesium, 0.25 to 0.75 mass % Copper and 1 to 2 mass % Ethylene Bis Stearamide (EBS). In particular, the powder may comprise 5.5 mass % Zinc, 2.5 mass % Magnesium, 0.5 mass % Copper and 1.5 mass % Ethylene Bis Stearamide (EBS).

In addition to providing internal lubrication to sintering powder, the method of the present invention may further comprise the step of providing external lubrication to die wall tooling, such as providing glycerol die wall lubrication. Such external lubrication of die wall tooling further facilitates pressing the even powder blend into the clutch friction member 1 through a reduction of friction along a die wall within a die pressing tool. External lubrication may also facilitate ejecting the clutch friction member 1 from such die pressing tool.

The sintering process according to the method of the present invention may further improve strength and durablity of the clutch friction member 1 in several ways. In an exemplary embodiment, after stamping the clutch friction member 1 to the final shape, the method may comprise the steps of heat treating the clutch friction member 1, heating/quencing (i.e. cooling under pressure) the clutch friction member 1 and further heat treating the clutch friction member 1. This embodiment may be viewed as post treatment of the sintered clutch friction member 1, which post treatment provides improved strength and durablity.

In a specific embodiment, heat treating the clutch friction member 1 comprises heating at a temperature between 500 °C and 550 °C, e.g. 520 °C; whereafter quencing the clutch friction member 1 comprises quencing in water; and wherein further heat treating the clutch friction member 1 comprises further heating at a temperature between 150 °C and 200 °C, e.g. 175°C.

The further heat treating step may be referred to as "aging" and may be performed for about 20 to 30 hours, e.g. 24 hours.

The present invention embodiments have been described above with reference to a number of exemplary embodiments as shown in the drawings. Modifications and alternative implementations of some parts or elements are possible, and are included in the scope of protection as defined in the appended claims.

## Claims

1. Clutch friction member for a friction clutch, comprising
a main friction member (2) of a base material comprising aluminum and one or more friction components (6) evenly distributed throughout the base material of the main friction member (2);
one or more outwardly projecting engagement members (4) arranged along an outer circumference (2a) of the main friction member (2) for engagement with a driving or driven member, wherein
the main friction member (2) and the one or more engagement members (4) form a single piece component and wherein
the one or more engagement members (4) are made of the base material having evenly distributed there through the one or more friction components (6).

2. Clutch friction member according to claim 1, wherein the main friction member (2) is a circular friction member, a circular friction disc or a circular friction ring.

3. Clutch friction member according to claim 1 or 2, wherein the base material comprises 10 to 25 vol% of the one or more friction components (6).

4. Clutch friction member according to any one of claims 1-3, wherein the one or more friction components (6) comprise silicon carbide, aluminium oxide, zirconium silicate, steel or any combination thereof.

5. Method of manufacturing a clutch friction member for a friction clutch, comprising the steps of:
a) mixing a powder of a base material comprising aluminum with one or more friction components (6) for obtaining an even powder blend thereof;
b) forming the even blend of the base material and the one or more friction components (6) into a main friction member (2) having a predetermined shape; and
c) providing one or more engagement members (4) along the main friction member (2), the one or more engagement members (4) being made of the even powder blend of the base material and the one or more friction components (6), the method further comprising
pressing the even powder blend into a clutch friction member (1) of an intermediate shape; baking the clutch friction member (1); and stamping the clutch friction member (1) to a final shape.

6. Method according to claim 5, wherein the step of b) further comprises forming the even blend of the base material and the one or more friction components (6) into a circular friction member, a circular friction disc or a circular friction ring.

7. Method according to claim 5 or 6, further comprising the steps of
d) grinding/sanding one or more sides (3a, 3b) of the main friction member (2) to obtain a predetermined surface flatness and/or surface roughness thereof; and
e) surface finishing the one or more sides (3a,3b).

8. Method according to any one of claims 5-7, wherein the step of pressing the even powder blend comprises pressing at a pressure between 100 to 150 MPa, and wherein the step of baking the clutch friction member (1) comprises baking at a baking temperature between 500° to 600° degree Celsius and/or at a baking pressure between 0.5 to 1.4 MPa.

9. Method according to any one of claims 5-8, wherein after stamping the clutch friction member (1) to the final shape, the method further comprises the steps of heat treating the clutch friction member (1), quencing the clutch friction member (1), and further heat treating the clutch friction member (1).

10. Method according to claim 9, wherein heat treating the clutch friction member (1) comprises heating at a temperature between 500 °C and 550 °C; whereafter quencing the clutch friction member (1) comprises quencing in water; and wherein further heat treating the clutch friction member (1) comprises further heating at a temperature between 150 °C and 200 °C.

11. Method according to any one of claims 5-10, wherein the base material comprises 10 to 25 vol% of the one or more friction components (6).

12. Method according to any one of claims 5-11, wherein the one or more friction components (6) comprise silicon carbide, aluminium oxide, zirconium silicate, steel or any combination thereof.

13. Method according to any one of claims 5-12, wherein the powder of the base material further comprises Zinc, Magnesium, Copper and Ethylene Bis Stearamide.

14. Method according to any one of claims 5-13, wherein the powder of the base material further comprises 5 to 6 mass % Zinc, 2 to 3 mass % Magnesium, 0.25 to 0.75 mass % Copper and 1 to 2 mass % Ethylene Bis Stearamide.

## Patentansprüche

1. Reibkupplungselement für eine Reibkupplung, welches
ein Hauptreibelement (2) aus einem Grundwerkstoff umfasst, welcher Aluminium und eine oder mehrere Reibkomponenten (6) umfasst, welche gleichmäßig in dem Grundwerkstoff des Hauptreibelementes (2) verteilt sind;
ein oder mehrere äußerlich überstehende Eingriffelemente (4), die entlang eines äußeren Umfangs (2a) des Hauptreibelementes (2) zum Eingriff in ein angetriebenes oder Antriebselement angeordnet sind, wobei
das Hauptreibelement (2) und das eine oder die mehreren Eingriffelemente (4) eine einzelne Teilkomponente bilden und wobei
das eine oder die mehreren Eingriffelemente (4) sich aus dem Grundwerkstoff zusammensetzen, in welchem die eine oder die mehreren Reibkomponenten (6) gleichmäßig verteilt sind.

2. Reibkupplungselement nach Anspruch 1, wobei das Hauptreibelement (2) ein kreisförmiges Reibelement, eine kreisförmige Reibscheibe oder ein kreisförmiger Reibring ist.

3. Reibkupplungselement nach Anspruch 1 oder 2, wobei der Grundwerkstoff 10 bis 25 Vol.-% der einen oder der mehreren Reibkomponenten (6) umfasst.

4. Reibkupplungselement nach einem der Ansprüche 1 bis 3, wobei die eine oder die mehreren Reibkomponenten (6) Siliziumkarbid, Aluminiumoxid, Zirkoniumsilikat, Stahl oder eine Kombination davon umfassen.

5. Verfahren zum Herstellen eines Reibkupplungselementes für eine Reibkupplung, umfassend die Schritte:
a) Mischen eines Pulvers aus einem Grundwerkstoff, welcher Aluminium mit einer oder mehreren Reibkomponenten (6) umfasst, um ein gleichmäßiges Pulvergemisch daraus zu erhalten;
b) Bilden eines gleichmäßigen Gemisches aus dem Grundwerkstoff und der einen oder mehrerer Reibkomponenten (6) zu einem Hauptreibelement (2) mit einer vorgegebenen Form; und
c) Bereitstellen eines oder mehrerer Eingriffemente (4) entlang des Hauptreibelementes (2), wobei das eine oder mehrere Eingriffelemente (4) aus dem gleichmäßigen Pulvergemisch des Grundwerkstoffs und der einen oder der mehreren Reibkomponenten (6) hergestellt sind, das Verfahren ferner umfassend:
Pressen des gleichmäßigen Pulvergemisches in ein Reibkupplungselement (1), welches eine Zwischenform aufweist; Brennen des Reibkupplungselementes (1); und Stanzen des Reibkupplungselementes (1) in eine endgültige Form.

6. Verfahren nach Anspruch 5, wobei der Schritt b) ferner ein Bilden des gleichmäßigen Gemisches aus dem Grundwerkstoff und der einen oder der mehreren Reibkomponenten (6) zu einem kreisförmigen Reibelement, einer kreisförmigen Reibscheibe oder einem kreisförmigen Reibring umfasst.

7. Verfahren nach Anspruch 5 oder 6, ferner umfassend die Schritte:
d) Schleifen/Schmirgeln einer oder mehrerer Seiten (3a, 3b) des Hauptreibelementes (2), um eine vorgegebene Oberflächenebenheit und/oder Oberflächenrauheit hierfür zu erhalten; und
e) Oberflächenveredelung der einen oder mehreren Seiten (3a, 3b).

8. Verfahren nach einem der Ansprüche 5 bis 7, wobei der Schritt des Pressens des gleichmäßigen Pulvergemisches ein Pressen mit einem Druck zwischen 100 bis 150 MPa umfasst und wobei der Schritt des Brennens des Reibkupplungselementes (1) ein Brennen bei einer Brenntemperatur zwischen 500 °C bis 600 °C und/oder bei einem Brenndruck zwischen 0,5 bis 1,4 MPa umfasst.

9. Verfahren nach einem der Ansprüche 5 bis 8, wobei nach dem Stanzen des Reibkupplungselementes (1) in die endgültige Form das Verfahren ferner die Schritte umfasst: Wärmebehandlung des Reibkupplungselementes (1), Abschrecken des Reibkupplungselementes (1) und weiteres Wärmebehandeln des Reibkupplungselementes (1).

10. Verfahren nach Anspruch 9, wobei die Wärmebehandlung des Reibkupplungselementes (1) ein Erhitzen bei einer Temperatur zwischen 500 °C bis 550 °C umfasst; wonach das Abschrecken des Reibkupplungselementes (1) ein Abschrecken in Wasser umfasst; und wobei die weitere Wärmebehandlung des Reibkupplungselementes (1) eine weitere Wärmebehandlung bei einer Temperatur zwischen 150 °C und 200 °C umfasst.

11. Verfahren nach einem der Ansprüche 5 bis 10, wobei der Grundwerkstoff 10 bis 25 Vol.-% der einen oder mehreren Reibkomponenten (6) umfasst.

12. Verfahren nach einem der Ansprüche 5 bis 11, wobei die eine oder mehreren Reibkomponenten (6) Siliziumkarbid, Aluminiumoxid, Zirkoniumsilikat, Stahl oder eine Kombination davon umfassen.

13. Verfahren nach einem der Ansprüche 5 bis 12, wobei das Pulver des Grundwerkstoffes weiterhin Zink, Magnesium, Kupfer und Distearylethylendiamid umfasst.

14. Verfahren nach einem der Ansprüche 5 bis 13, wobei das Pulver des Grundwerkstoffes ferner 5 bis 6 Gew.-% Zink, 2 bis 3 Gew.-% Magnesium, 0,25 bis 0,75 Gew.-% Kupfer und 1 bis 2 Gew.-% Distearylethylendiamid umfasst.

## Revendications

1. Elément de friction d'embrayage pour un embrayage à friction, comprenant
un élément de friction principal (2) en un matériau de base comprenant de l'aluminium et un ou plusieurs composants de friction (6) répartis uniformément dans le matériau de base de l'élément de friction principal (2) ;
un ou plusieurs éléments de mise en prise faisant saillie vers l'extérieur (4) agencés le long d'une circonférence extérieure (2a) de l'élément de friction principal (2) pour une mise en prise avec un élément d'entraînement ou entraîné, dans lequel
l'élément de friction principal (2) et les un ou plusieurs éléments de mise en prise (4) forment un composant monobloc, et dans lequel
les un ou plusieurs éléments de mise en prise (4) sont constitués du matériau de base ayant les un ou plusieurs composants de friction (6) répartis de manière uniforme à travers celui-ci.

2. Elément de friction d'embrayage selon la revendication 1, dans lequel l'élément de friction principal (2) est un élément de friction circulaire, un disque de friction circulaire ou une bague de friction circulaire.

3. Elément de friction d'embrayage selon la revendication 1 ou 2, dans lequel le matériau de base comprend 10 à 25 % en volume des un ou plusieurs composants de friction (6).

4. Elément de friction d'embrayage selon l'une quelconque des revendications 1 à 3, dans lequel les uns ou plusieurs composants de friction (6) comprennent du carbure de silicium, de l'oxyde d'aluminium, du silicate de zirconium, de l'acier ou toute combinaison de ceux-ci.

5. Méthode de fabrication d'un élément de friction d'embrayage pour un embrayage à friction, comprenant les étapes consistant à :
a) mélanger une poudre d'un matériau de base comprenant de l'aluminium avec un ou plusieurs composants de friction (6) afin d'obtenir un mélange de poudre uniforme de ceux-ci ;
b) former le mélange uniforme du matériau de base et des un ou plusieurs composants de friction (6) en un élément de friction principal (2) ayant une forme prédéterminée ; et
c) fournir un ou plusieurs éléments de mise en prise (4) le long de l'élément de friction principal (2), les un ou plusieurs éléments de mise en prise (4) étant constitués du mélange de poudre uniforme du matériau de base et des un ou plusieurs composants de friction (6), la méthode comprenant en outre les étapes consistant à
presser le mélange de poudre uniforme en un élément de friction d'embrayage (1) d'une forme intermédiaire ; cuire l'élément de friction d'embrayage (1) ; et estamper l'élément de friction d'embrayage (1) jusqu'à une forme finale.

6. Méthode selon la revendication 5, dans lequel l'étape de b) comprend en outre l'étape consistant à former le mélange uniforme du matériau de base et des un ou plusieurs composants de friction (6) en un élément de friction circulaire, un disque de friction circulaire ou un anneau de friction circulaire.

7. Méthode selon la revendication 5 ou 6, comprenant en outre les étapes consistant à
d) meuler/poncer un ou plusieurs côtés (3a, 3b) de l'élément de friction principal (2) pour obtenir une planéité et/ou une rugosité de surface prédéterminées de celui-ci ; et
e) réaliser une finition de surface des un ou plusieurs côtés (3a, 3b).

8. Méthode selon l'une quelconque des revendications 5 à 7, dans laquelle l'étape consistant à presser le mélange de poudre uniforme comprend un pressage à une pression comprise entre 100 et 150 MPa, et dans laquelle l'étape consistant à cuire l'élément de friction d'embrayage (1) comprend une cuisson à température de cuisson comprise entre 500 et 600°C et / ou à une pression de cuisson comprise entre 0,5 et 1,4 MPa.

9. Méthode selon l'une quelconque des revendications 5 à 8, dans laquelle après l'estampage de l'élément de friction d'embrayage (1) à la forme finale, la méthode comprend en outre les étapes consistant à traiter thermiquement l'élément de friction d'embrayage (1), à tremper l'élément de friction d'embrayage (1), et à traiter thermiquement l'élément de friction d'embrayage (1) de manière supplémentaire.

10. Méthode selon la revendication 9, dans lequel le traitement thermique de l'élément de friction d'embrayage (1) comprend un chauffage à une température comprise entre 500°C et 550°C ; à la suite de quoi la trempe de l'élément de friction d'embrayage (1) comprend une trempe dans de l'eau ; et dans laquelle un traitement thermique supplémentaire de l'élément de friction d'embrayage (1) comprend un chauffage supplémentaire à une température comprise entre 150°C et 200°C.

11. Méthode selon l'une quelconque des revendications 5 à 10, dans laquelle le matériau de base comprend 10 à 25 % en volume des un ou plusieurs composants de friction (6).

12. Méthode selon l'une quelconque des revendications 5 à 11, dans laquelle les un ou plusieurs composants de friction (6) comprennent du carbure de silicium, de l'oxyde d'aluminium, du silicate de zirconium, de l'acier ou toute combinaison de ceux-ci.

13. Méthode selon l'une quelconque des revendications 5 à 12, dans laquelle la poudre du matériau de base comprend en outre du zinc, du magnésium, du cuivre et de l'éthylène-bis-stéaramide.

14. Méthode selon l'une quelconque des revendications 5 à 13, dans laquelle la poudre du matériau de base comprend en outre 5 à 6 % en masse de zinc, 2 à 3 % en masse de magnésium, 0,25 à 0,75 % en masse de cuivre et 1 à 2 % en masse d'éthylène-bis-stéaramide.
